# EUROPÄISCHE PATENTSCHRIFT

(11) **EP 3 404 228 B1**
(45) Veröffentlichungstag und Bekanntmachung des Hinweises auf die Patenterteilung: **18.03.2020**
(21) Anmeldenummer: 18164849.4
(22) Anmeldetag: 29.03.2018
(51) Int. Cl.: F01N 9/00, F01N 3/023, F02D 41/02

(54) **REGENERATION EINES PARTIKELFILTERS ODER VIER-WEGE-KATALYSATORS IN EINER ABGASANLAGE EINES VERBRENNUNGSMOTORS**
REGENERATION OF A PARTICLE FILTER OR FOUR-WAY CATALYTIC CONVERTER IN THE EXHAUST SYSTEM OF A COMBUSTION ENGINE
RÉGÉNÉRATION D'UN FILTRE À PARTICULES OU CATALYSEUR À QUATRE VOIES DANS UNE INSTALLATION D'ÉCHAPPEMENT D'UN MOTEUR À COMBUSTION INTERNE

(30) Priorität: 18.05.2017 DE 102017208438
(43) Veröffentlichungstag der Anmeldung: 21.11.2018
(73) Patentinhaber: VOLKSWAGEN AKTIENGESELLSCHAFT, 38440 Wolfsburg (DE)
(72) Erfinder: Sudschajew, David, 38527 Abbesbüttel (DE)

(56) Entgegenhaltungen:
- US-A1- 2010 089 035
- US-A1- 2011 072 793
- US-A1- 2016 201 534

## Beschreibung

Die Erfindung betrifft eine Vorrichtung sowie ein Verfahren zur Regeneration eines Partikelfilters oder eines Vier-Wege-Katalysators in einer Abgasanlage eines Verbrennungsmotors.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Ferner wird angestrebt, die Katalysatoren im Abgaskanal des Verbrennungsmotors nach einem Kaltstart möglichst schnell auf eine Betriebstemperatur zu bringen, um möglichst schnell eine hohe Konvertierungsrate für schädliche Abgaskomponenten zu erreichen. Diese Magerverstellung des Verbrennungsmotors während der Regeneration des Partikelfilters kann jedoch dazu führen, dass es während der Regeneration des Partikelfilter zu einem signifikanten Anstieg der Stickoxid-Emissionen (NOx-Emissionen) kommt, da bei einem überstöchiometrischen Verbrennungsluftverhältnis im Abgas keine Komponenten wie Kohlenstoffmonoxid (CO) oder unverbrannte Kohlenwasserstoffe (HC) mehr enthalten sind, mit denen auf dem Drei-Wege-Katalysator eine katalytische Reduktion der Stickoxid-Emissionen zu molekularem Stickstoff möglich ist.

Aus der DE 10 2013 220 899 A1 ist ein Verfahren zur Regeneration eines Partikelfilters in einer Abgasanlage eines Verbrennungsmotors bekannt, wobei die Temperatur des Abgases des Verbrennungsmotors durch eine entsprechende Lambdaregelung angepasst wird, um die für die Regeneration des Partikelfilters notwendige Temperatur sowie ein gleichzeitiges Vorliegen von Restsauerstoff im Abgaskanal des Verbrennungsmotors sicherzustellen. Nachteilig an einem solchen Verfahren ist jedoch, dass es durch die Magerverstellung des Verbrennungsmotors zu einer Erhöhung der Stickoxid-Emissionen im Abgas während der Regeneration des Partikelfilters kommt.

Aus der WO 2015/169958 A1 ist ein fremdgezündeter Verbrennungsmotor bekannt, in dessen Abgasanlage ein Partikelfilter angeordnet ist, wobei zur Regeneration des Partikelfilters ein mehrstufiges Verfahren durchgeführt wird, um den Fahrkomfort während der Regeneration des Partikelfilters nur so wenig wie möglich zu reduzieren. Dazu wird eine passive Regeneration des Partikelfilters in einer Schubphase des Verbrennungsmotors als "mildeste" Maßnahme mit entsprechenden aktiven Maßnahmen zur Regeneration kombiniert, wobei in einem mehrstufigen Prozess jeweils die Maßnahmen ausgewählt werden, welche mit dem geringsten Eingriff in den Fahrkomfort beziehungsweise die Leistung des Verbrennungsmotors durchgeführt werden können. Nachteilig an einem solchen Verfahren ist jedoch, dass es auch hier bei den aktiven Maßnahmen zu einer Magerverstellung des Verbrennungsluftverhältnisses des Verbrennungsmotors und einem damit verbundenen Anstieg der Stickoxid-Emissionen kommt.

Die DE 10 2012 022 153 A1 offenbart ein Verfahren zur Regeneration eines Partikelfilters im Abgaskanal eines Ottomotors, wobei in einem ersten Schritt die Temperatur des Partikelfilters oder eines Abgasmassenstroms durch den Partikelfilter bestimmt wird, und bei Erreichen einer Regenerationstemperatur des Partikelfilters der im Partikelfilter zurückgehaltene Ruß oxidiert wird, indem der Sauerstoffanteil im Abgas über ein stöchiometrisches Abgas hinaus erhöht wird.

Aus der DE 10 2010 046 899 A1 ist eine Regeneration eines Partikelfilters im Abgaskanal eines Verbrennungsmotors bekannt, wobei die Regeneration während der Abschaltung des Verbrennungsmotors erfolgt. Dabei erfolgt eine Verstellung des Verbrennungsluftverhältnisses in Richtung "mager" unmittelbar vor dem Ausschalten der Zündung, wenn der Partikelfilter eine entsprechende Beladung aufweist und die Temperatur das Partikelfilters hoch genug ist, um beim Abschalten des Verbrennungsmotors eine Teil-Regeneration des Partikelfilters zu ermöglichen. Das vorgeschlagene Verfahren ermöglicht jedoch nur die Regeneration einer geringen Teilmenge des im Partikelfilter zurückgehaltenen Rußes, da der Zeitraum, in dem sauerstoffreiche Luft nach Abstellen der Einspritzung und der Zündung in den Abgaskanal gefördert wird, vergleichsweise kurz ist.

Die US 2010 / 089 035 A1 offenbart ein Verfahren zur Regenration eines Partikelfilters in der Abgasanlage einer Baumaschine. Dabei wird bei einem Abschaltewunsch des Verbrennungsmotors überprüft, wie hoch die Beladung des Partikelfilters ist. Bei einer geringen Beladung wird der Verbrennungsmotor unmittelbar gestoppt. Bei einer hohen Beladung wird der Abschaltewunsch zunächst verweigert und eine Zwangsregeneration des Partikelfilters durchgeführt und der Verbrennungsmotor anschließend abgestellt.

Aus der US 2011 / 072 793 A1 sind ein Abgasnachbehandlungssystem und ein Verfahren zur Regeneration eines Partikelfilters in einer Abgasanlage eines Verbrennungsmotors bekannt. Dabei wird während eines Motorstillstands des Verbrennungsmotors die Drosselklappe geöffnet und stromabwärts der Drosselklappe Sekundärluft aus dem Ansaugtrakt entnommen und über eine Sekundärluftleitung in den Abgaskanal eingeblasen, um den Partikelfilter zu regenerieren.

Die US 2016 / 201 534 A1 offenbart unterschiedliche Verfahren zum Betreiben eines Abgasnachbehandlungssystems mit einem Drei-Wege-Katalysator und einem Partikelfilter. Dabei wird eine passive Regeneration eines Partikelfilters in der Abgasanlage eines Verbrennungsmotors durchgeführt, indem in einem Schubbetrieb die Kraftstoffeinspritzung ausgeschaltet wird und die Schubphase des Kraftfahrzeuges dazu genutzt wird, den Partikelfilter zu regenerieren.

Darüber hinaus sind Abgasnachbehandlungssysteme bekannt, bei denen die Temperatur des Partikelfilters durch motorische Maßnahmen, insbesondere durch eine Verstellung des Zündwinkels in Richtung "spät" erhöht wird, bis die Regenerationstemperatur des Partikelfilters erreicht ist, und der zur Oxidation des im Partikelfilter zurückgehaltenen Rußes benötigte Sauerstoff dem Abgaskanal über ein Sekundärluftsystem zugeführt wird. Dazu wird aber stets ein Sekundärluftsystem benötigt, was die Kosten für den Verbrennungsmotor deutlich erhöht.

Der Erfindung liegt nun die Aufgabe zugrunde, bei einer Abgasanlage ohne Sekundärluftsystem eine zumindest im Wesentlichen emissionsneutrale Regeneration des Partikelfilters zu ermöglichen und die aus dem Stand der Technik bekannten Nachteile zu überwinden.

Erfindungsgemäß wird diese Aufgabe durch ein Verfahren zur Abgasnachbehandlung eines Verbrennungsmotors, in dessen Abgasanlage ein Partikelfilter oder ein Vier-Wege-Katalysator angeordnet ist, gelöst, welches folgende Schritte umfassend:
- Betreiben des Verbrennungsmotors in einem Normalbetrieb mit stöchiometrischem Verbrennungsluftverhältnis, wobei die bei der Verbrennung entstehenden Rußpartikel in der Abgasanlage durch den Partikelfilter oder den Vier-Wege-Katalysator zurückgehalten werden,
- Ermitteln des Partikeleintrags in den Partikelfilter oder den Vier-Wege-Katalysator durch ein Berechnungsmodell,
- Übermitteln eines Abschaltwunsches des Verbrennungsmotors an ein Steuergerät des Verbrennungsmotors,
- Abschalten der Kraftstoffeinspritzung in die Brennräume des Verbrennungsmotors, wobei die Kraftstoffeinspritzung abgeschaltet wird, wenn die Motordrehzahl des Verbrennungsmotors oberhalb eines Schwellenwertes liegt,
- Regeneration des Partikelfilters oder des Vier-Wege-Katalysators durch den beim Auslauf des Verbrennungsmotors nach Abschaltung der Kraftstoffeinspritzung in die Abgasanlage geförderten Restsauerstoffs, wobei
- der Rußaustrag aus dem Partikelfilter oder dem Vier-Wege-Katalysator durch ein Berechnungsmodell ermittelt wird.

Bei einem solchen Verfahren kann eine Regeneration des Partikelfilters, insbesondere eine Regeneration in mehreren Teilschritten, erfolgen, ohne dass es während der Regeneration zu einem signifikanten Anstieg der Emissionen, insbesondere der Stickoxidemissionen, kommt. Durch das erfindungsgemäße Verfahren ist keine Magerverstellung des Verbrennungsmotors notwendig. Somit kann eine Abgasreinigung und eine Konvertierung des Schadstoffe durch einen Drei-Wege-Katalysator während des gesamten Motorbetriebs gewährleistet werden, und es nicht notwendig zusätzliche Maßnahmen zur Abgasnachbehandlung während der Regeneration des Partikelfilters zu ergreifen. Durch die Abschaltung der Kraftstoffeinspritzung dreht sich der Verbrennungsmotor aufgrund der Massenträgheit weiter, sodass zwischen dem Zeitpunkt der Abschaltung der Kraftstoffeinspritzung und dem Motorstillstand sauerstoffreiche Luft in den Abgaskanal gefördert wird, mit welcher die im Partikelfilter zurückgehaltenen Rußpartikel oxidiert werden.

Durch die in den abhängigen Ansprüchen aufgeführten Merkmale sind vorteilhafte Verbesserungen und Weiterbildungen des im unabhängigen Anspruch angegebenen Verfahrens zur Abgasnachbehandlung eines Verbrennungsmotors möglich.

In bevorzugter Ausgestaltung der Erfindung ist vorgesehen, dass die Drehzahl des Verbrennungsmotors vor dem Abschalten auf eine Drehzahl oberhalb des Schwellenwertes angehoben wird, wenn sich der Verbrennungsmotor zum Zeitpunkt des Abschaltwunsches im Leerlauf befindet. Durch eine Anhebung der Motordrehzahl vor dem Abschalten des Verbrennungsmotors und insbesondere vor dem Abschalten der Kraftstoffeinspritzung in die Brennräume des Verbrennungsmotors kann die Luftmenge gesteigert werden, welche zur Regeneration des Partikelfilters zur Verfügung steht. Dabei wird wiederum die Trägheit des Verbrennungsmotors genutzt, um während des Anhaltevorgangs eine Teilregeneration des Partikelfilters durchzuführen. Geht man von einer Teilbeladung oder vollständigen Beladung des Partikelfilters aus, bevor eine Regeneration des Partikelfilters oder Vier-Wege-Katalysators notwendig ist, so kann durch das vorgeschlagene Verfahren bei jedem Motorstopp eine Teilmenge von 1mg bis 100mg aus dem Partikelfilter ausgetragen werden. Dadurch sind entsprechend viele Teilregenerationen notwendig, welche aber jeweils ohne Zusatzaufwand realisiert werden können und somit für den Fahrer eines Kraftfahrzeuges nicht spürbar sind.

Dabei liegt der Schwellenwert für die Motordrehzahl oberhalb der gewöhnlichen Leerlaufdrehzahl des Verbrennungsmotors. Durch eine Anhebung der Drehzahl vor dem Abschalten wird der Auslaufvorgang des Verbrennungsmotors verlängert, wodurch mehr Sauerstoff in die Abgasanlage gefördert wird. Dadurch kann eine größere Teilmenge der Rußpartikel oxidiert werden. Somit sind weniger Regenerationsschritte bis zur vollständigen Regeneration des Partikelfilters notwendig.

Besonders bevorzugt ist dabei, wenn der Schwellenwert für die Motordrehzahl oberhalb von 900 U/min liegt. Da PKW-Motoren in der Regel eine Leerlaufdrehzahl von 650 U/min bis 900 U/min haben, kann durch einen solchen Schwellenwert sichergestellt werden, dass eine hinreichende Menge an Sauerstoff in den Abgaskanal des Verbrennungsmotors gelangt.

In weiterer bevorzugter Ausgestaltung des Verfahrens ist vorgesehen, dass die Kraftstoffeinspritzung in die Brennräume des Verbrennungsmotors nur dann abgeschaltet wird, wenn die Temperatur des Partikelfilters oder des Vier-Wege-Katalysators oder die Abgastemperatur oberhalb einer Schwellentemperatur liegt. Die Nutzung des Start/Stopp-Systems für eine aktive Regeneration wird kontinuierlich eingesetzt. Der Motor geht auch in die Stopp-Phase , also Einspritzung aus auch wenn der Filter nicht regeneriert wird. Das wird aus Fahrverhaltenssicht gemacht. Das Fahrzeug muss sich immer gleich verhalten. Zur Regeneration des Partikelfilters, d.h. zur Oxidation der im Partikelfilter oder Vier-Wege-Katalysator zurückgehaltenen Rußpartikel ist neben dem Vorliegen von Sauerstoff zeitgleich eine Mindesttemperatur notwendig, um die Oxidation des Rußes zu ermöglichen. Befinden sich der Partikelfilter oder der Vier-Wege-Katalysator auf einem Temperaturniveau unterhalb dieser Mindesttemperatur, so ist Regeneration des Partikelfilters durch das vorgeschlagenen Verfahren nicht möglich. Daher wird in diesem Betriebszuständen auf das Einleiten des erfindungsgemäßen Verfahrens verzichtet und der Verbrennungsmotor insbesondere ohne eine Anhebung der Drehzahl abgestellt.

Dabei liegt die Schwellentemperatur vorzugsweise im Bereich zwischen 550°C und 750°C. In diesem Temperaturbereich ist eine Oxidation des im Partikelfilters zurückgehaltenen Rußes ohne die Gefahr einer thermischen Schädigung des Partikelfilters möglich.

Gemäß einer Verbesserung des vorgeschlagenen Verfahrens ist vorgesehen, dass eine Drosselklappe im Ansaugkanal des Verbrennungsmotors bei einem Abschaltwunsch des Verbrennungsmotors vollständig geöffnet wird. Durch das Öffnen der Drosselklappe kann die dem Abgaskanal zugeführte Luftmenge und somit die Sauerstoffmenge, welche zur Oxidation des im Partikelfilter oder im Vier-Wege-Katalysator zurückgehaltenen Rußes zur Verfügung steht, vergrößert werden. Dadurch kann eine größere Teilmenge der Rußpartikel oxidiert werden. Somit sind weniger Regenerationsschritte bis zur vollständigen Regeneration des Partikelfilters notwendig. Gleichzeitig kann die Oxidation durch eine Stellung der Drosselklappe eingedämmt werden, um den Filter thermisch nicht zu überhitzen. Auch dieses ist optional je nach Projekt anzuwenden.

In einer bevorzugten Ausführungsform des Verfahrens ist vorgesehen, dass das Abschaltsignal des Verbrennungsmotors durch ein Start-Stopp-System des Verbrennungsmotors getriggert wird. Bei einem Start-Stopp-System erfolgt das Abschalten des Verbrennungsmotors wesentlich häufiger als bei einem Verbrennungsmotor ohne Start-Stopp-System, beispielsweise beim Stopp an einer Ampel. Dadurch wird die Anzahl der Regenerationsphasen erhöht, wodurch die aus dem Partikelfilter ausgetragene Partikelmasse vergrößert werden kann. Bei einem häufigen Start-Stopp-Prozess beispielsweise im Stop- and Go-Verkehr kann somit innerhalb vergleichsweise kurzer Zeit eine im Wesentlichen vollständige Regeneration des Partikelfilters erreicht werden.

In einer weiteren Verbesserung des Verfahrens ist vorgesehen, dass das Verfahren gestartet wird, wenn die Beladung des Partikelfilters oder des Vier-Wege-Katalysators oberhalb eines Schwellenwertes für die Beladung des Partikelfilters oder des Vier-Wege-Katalysators liegt. Zwar ist es prinzipiell auch möglich, dass Verfahren unabhängig vom Beladungszustand des Partikelfilters oder des Vier-Wege-Katalysators durchzuführen. Jedoch ist die Einleitung des Verfahrens unter Anhebung der Drehzahl des Verbrennungsmotors vor dem Abschaltvorgang besonders vorteilhaft, wenn der Partikelfilter einen ersten Schwellenwert für die Beladung des Partikelfilters oder des Vier-Wege-Katalysators erreicht hat.

Gemäß einer weiteren, vorteilhaften Ausführungsform des Verfahrens ist vorgesehen, dass bei Erkennen eines zeitnahen Abschaltwunsches des Verbrennungsmotors die Abgastemperatur angehoben wird. Dadurch können der Partikelfilter oder der Vier-Wege-Katalysator auf eine Regenerationstemperatur aufgeheizt werden, sodass der durch das vorgeschlagenen Verfahren in den Abgaskanal eingebrachte Sauerstoff auch ein hinreichende Temperatur zur Oxidation des Rußes vorfindet. Alternativ kann die Temperatur auch dazu angehoben werden, um den Rußabbrand auf dem Partikelfilter zu beschleunigen und in dem zeitliche begrenzten Fenster zwischen Abschaltung der Kraftstoffeinspritzung und Stillstand des Verbrennungsmotors mehr Ruß aus dem Partikelfilter oder dem Vier-Wege-Katalysator auszutragen.

Erfindungsgemäß wird eine Vorrichtung zur Abgasnachbehandlung eines Verbrennungsmotors mit einer Abgasanlage, in der ein Partikelfilter oder ein Vier-Wege-Katalysator angeordnet ist, sowie mit einem Steuergerät mit einem maschinenlesbaren Programmcode gelöst, wobei das Steuergerät bei einer Ausführung des Programmcodes dazu eingerichtet ist, ein erfindungsgemäßes Verfahren durchzuführen. Durch eine solche Abgasnachbehandlungsvorrichtung ist eine besonders effiziente Abgasreinigung auch in Betriebsphasen, insbesondere bei einer Regeneration des Partikelfilters, möglich, in denen es bei aus dem Stand der Technik bekannten Abgasanlagen zu einem Anstieg der Emissionen kommen kann.

In einer bevorzugten Ausführungsform der Erfindung ist vorgesehen, dass der Partikelfilter oder der Vier-Wege-Katalysator motornah als erste Komponente der Abgasnachbehandlung angeordnet ist. Durch eine motornahe Anordnung des Partikelfilters oder Vier-Wege-Katalysators kann die Regenerationstemperatur von mindestens 550°C vergleichsweise einfach erreicht werden. Dadurch ist es möglich, die während der Abschaltung des Verbrennungsmotors in den Abgaskanal eingebrachten Frischluft effizient zur Oxidation des im Partikelfilter oder Vier-Wege-Katalysator zurückgehaltenen Rußes zu nutzen. Ist zusätzlich im Abgaskanal des Verbrennungsmotors ein NOx-Speicherkatalysator vorgesehen, so ist es besonders vorteilhaft, wenn der Partikelfilter oder Vier-Wege-Katalysator als erstes Komponente der Abgasnachbehandlung und der NOx-Speicherkatalysator stromabwärts des Partikelfilters oder der Vier-Wege-Katalysators angeordnet ist. Da die maximale Speicherfähigkeit von NOx-Speicherkatalysatoren in einem Temperaturbereich von ca. 250°C bis 480°C, und somit unterhalb der Regenerationstemperatur des Partikelfilters oder des Vier-Wege-Katalysators, liegt, ist es vorteilhaft, wenn das heiße Abgas zunächst den Partikelfilter oder Vier-Wege-Katalysator und dann den NOx-Speicherkatalysator durchströmt, um eine optimale Abgasnachbehandlung und geringstmögliche Emissionen zu erreichen.

Bevorzugt ist dabei, wenn dem Verbrennungsmotor ein Start-Stopp-System zugeordnet ist, mit welchem der Verbrennungsmotor bei einem Fahrzeugstillstand, beispielsweise bei einem Ampelstopp, angeschaltet wird und bei einem Anfahrwunsch wieder gestartet wird. Verbrennungsmotoren mit Start-Stopp-System weist wesentlich öfter Motorabschaltungen auf, sodass das vorgeschlagenen Verfahren wesentlich öfter eingekoppelt werden kann. Somit ist eine zeitnahe Regeneration des Partikelfilters oder des Vier-Wege-Katalysators möglich.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Verbrennungsmotor mit einem Ansaugtrakt und einer Abgasanlage, mit welcher die Emissionen während der Regeneration des Partikelfilters in einem erfindungsgemäßen Verfahren reduziert werden können;
- Figur 2: eine alternative Ausführungsform der erfindungsgemäßen Abgasanlage, bei der anstelle eines Partikelfilters motornah ein Vier-Wege-Katalysator angeordnet ist;
- Figur 3: ein Diagramm zum Ablauf eines erfindungsgemäßen Verfahrens zur Abgasnachbehandlung eines Verbrennungsmotors.

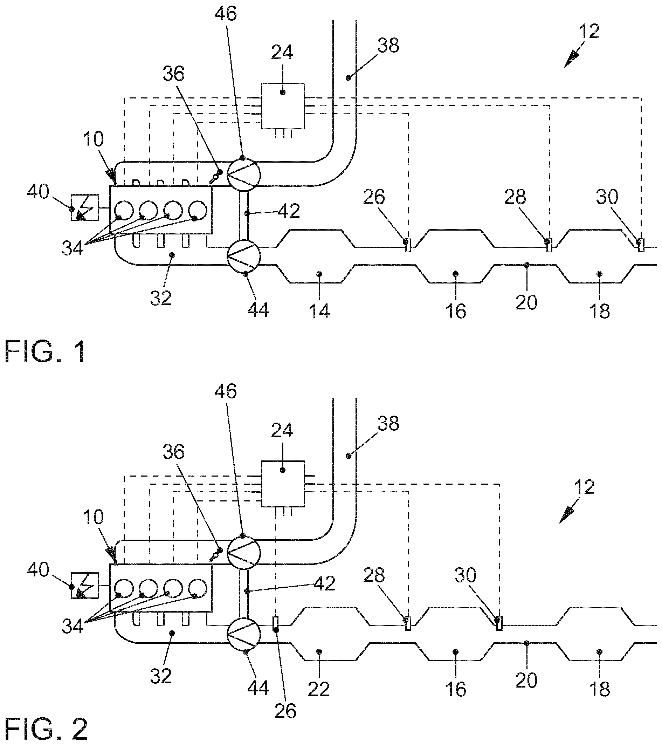

Figur 1 zeigt eine schematische Darstellung eines Verbrennungsmotors 10 mit einer an einem Auslass 32 des Verbrennungsmotors 10 angeschlossenen Abgasanlage 12. In der Abgasanlage 12 ist in Strömungsrichtung eines Abgases des Verbrennungsmotors 10 durch die Abgasanlage 12 motornah ein Partikelfilter 14 angeordnet. Unter einer motornahen Position ist in diesem Zusammenhang eine Position in der Abgasanlage mit einem Abstand von weniger als 80 cm, vorzugsweise von weniger als 50 cm, Abgaslauflänge von dem Auslass 32 des Verbrennungsmotors 10 zu verstehen. Stromabwärts des Partikelfilters 14, insbesondere in einer Unterbodenlage eines Kraftfahrzeuges, sind ein Drei-Wege-Katalysator 16 und weiter stromabwärts ein NOx-Speicherkatalysator 18 angeordnet, welche durch einen Abgaskanal 20 der Abgasanlage 12 miteinander verbunden sind. Die Menge des eingespritzten Kraftstoffes in die Brennräume 34 des Verbrennungsmotors 10 und somit das Verbrennungsluftverhältnis λ_{E} des Verbrennungsmotors 10 ist über ein Steuergerät 24 steuerbar. Zur Regelung des Verbrennungsluftverhältnisses λ_{E} des Verbrennungsmotors 10 sind im Abgaskanal 20 mehrere Lambdasonden 26, 28, 30 angeordnet. Stromabwärts des Auslasses 32 des Verbrennungsmotors 10 und stromaufwärts des Partikelfilters 14 ist ein Abgasturbolader 42 vorgesehen, dessen Turbine 44 von einem Abgasstrom des Verbrennungsmotors 10 angetrieben wird. Der Verbrennungsmotor 10 weist ferner einen Ansaugtrakt mit einem Ansaugkanal 38 auf, in dem eine Drosselklappe 36 zur Steuerung der den Brennräumen 34 des Verbrennungsmotors 10 zugeführten Luftmenge, angeordnet ist. Ferner ist in dem Ansaugtrakt ein Verdichter 46 angeordnet, welcher durch die Turbine 44 des Abgasturbolader 42 angetrieben wird und die dem Verbrennungsmotor 10 zugeführte Frischluft verdichtet. Dem Verbrennungsmotor 10 ist ein Start-Stopp-System 40 zugeordnet, mit welchem der Verbrennungsmotor 10 bei einem Fahrzeugstillstand abgeschaltet wird und erst auf ein Startsignal, beispielsweise das Lösen des Bremspedals, wieder gestartet wird.

Bei im Wesentlichen gleichem Aufbau wie zu Figur 1 beschrieben, ist in dem in Figur 2 dargestellten Ausführungsbeispiel der (unbeschichtete) Partikelfilter 14 durch einen Partikelfilter mit einer drei-Wege-katalytisch wirksamen Beschichtung, einem sogenannten Vier-Wege-Katalysator 22 ersetzt. Der Vier-Wege-Katalysator 22 vereint dabei die Funktionen eines Partikelfilters und eines Drei-Wege-Katalysators. Durch die Anordnung des weiteren Drei-Wege-Katalysators 16 in der Unterbodenlage des Kraftfahrzeuges kann der Vier-Wege-Katalysator vergleichsweise klein ausgeführt werden, um eine schnelle Erwärmung auf eine Betriebstemperatur nach einem Kaltstart des Verbrennungsmotors 10 zu ermöglichen. Alternativ kann durch den Vier-Wege-Katalysator 22 auch ein weiterer Drei-Wege-Katalysator 16, insbesondere ein Drei-Wege-Katalysator 16 in Unterbodenlage des Kraftfahrzeuges, entfallen.

Im Betrieb des Verbrennungsmotors 10 werden die bei der Verbrennung auftretenden Partikel im Abgas des Verbrennungsmotors 10 durch den Partikelfilter 14 oder den Vier-Wege-Katalysator 22 zurückgehalten. Dabei wird der Partikelfilter 14 oder der Vier-Wege-Katalysator 22 in bekannter Art und Weise mit Ruß beladen. Infolge der Beladung können Effekte wie ein erhöhter Kraftstoffverbrauch, Leistungsverlust und Zündaussetzer auftreten, wenn der Abgasgegendruck durch die Beladung des Partikelfilters 14 oder des Vier-Wege-Katalysators 22 über einen bestimmten Schwellenwert S_{L} ansteigt. Folglich muss der Partikelfilter 14 oder der Vier-Wege-Katalysator 22 zyklisch oder in Abhängigkeit der Beladung regeneriert werden. Zur Regeneration des Partikelfilters 14 oder des Vier-Wege-Katalysators 22 ist neben dem Erreichen einer Regenerationstemperatur das Vorliegen von Restsauerstoff in der Abgasanlage notwendig, um die im Partikelfilter 14 oder im Vier-Wege-Katalysator 22 zurückgehaltenen Rußpartikel zu oxidieren. Durch den überstöchiometrischen Betrieb des Verbrennungsmotors 10 verlieren der Drei-Wege-Katalysator 16 und der Vier-Wege-Katalysator 22 ihre Konvertierungseigenschaften für Stickoxide, da kein Reduktionsmittel zur Reduktion von Stickoxiden zu elementarem Stickstoff mehr vorhanden ist.

Um einen überstöchiometrischen Betrieb des Verbrennungsmotors 10 und die damit verbundene Erhöhung der Stickoxidemissionen zu vermeiden, ist vorgesehen, den zur Regeneration des Partikelfilter 14 oder des Vier-Wege-Katalysator 22 notwendigen Sauerstoff in die Abgasanlage zu fördern, indem beim Abschalten des Verbrennungsmotors 10 zunächst die Kraftstoffeinspritzung in die Brennräume 24 des Verbrennungsmotors 10 abgeschaltet wird und die Restdrehzahl des Verbrennungsmotor 10 bis zum Stillstand genutzt wird, um sauerstoffreiche Frischluft in die Abgasanlage 12 zu fördern.

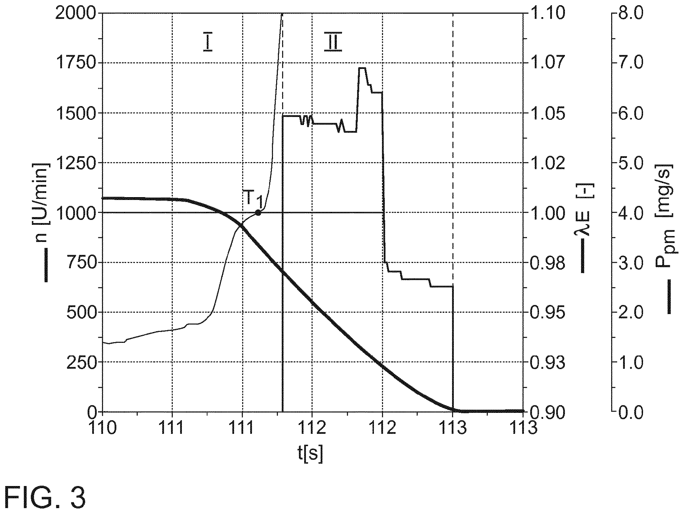

In Figur 3 ist ein Motordiagramm dargestellt, anhand dessen ein erfindungsgemäßes Verfahren zur Abgasnachbehandlung des Verbrennungsmotors 10 erläutert wird. Dabei ist die Motordrehzahl n des Verbrennungsmotors über die Zeit t dargestellt. In einer ersten Phase I des Verfahrens wird geprüft, ob die Drehzahl n des Verbrennungsmotors 10 oberhalb eines Schwellenwertes S₁ für die Drehzahl n liegt. Liegt die Drehzahl n unterhalb diese Schwellenwertes S₁, insbesondere bei der gewöhnlichen Leerlaufdrehzahl nₗ, so wird zunächst die Drehzahl n des Verbrennungsmotors auf eine Drehzahl n oberhalb des Schwellenwertes S₁, insbesondere auf eine Drehzahl von mindestens 1100 U/min, besonders bevorzugt von mindestens 1200 U/min, angehoben. Liegt die Drehzahl n des Verbrennungsmotors 10 oberhalb des Schwellenwertes S₁ so erfolgt keine zusätzliche Maßnahme. In einem zweiten Verfahrensschritt wird zu einem Zeitpunkt T₁ die Einspritzung von Kraftstoff in die Brennräume 34 des Verbrennungsmotors 10 abgeschaltet und die Zündung abgestellt. Dadurch fällt die Drehzahl n des Verbrennungsmotors 10 von eine Betriebsdrehzahl auf 0 ab, sodass der Verbrennungsmotor 10 zum Stehen kommt. Während des Abschaltens fördert der Verbrennungsmotor durch seine Trägheit bis zum Stillstand Frischluft in den Abgaskanal 20. Dabei stellt sich kurzfristig in einer zweiten Phase II ein Sauerstoffüberschuss λ>>1 in der Abgasanlage 12 ein, sodass der im Partikelfilter 14 oder in dem Vier-Wege-Katalysator 22 zurückgehaltene Ruß oxidert und aus dem Partikelfilter 14 oder dem Vier-Wege-Katalysator 22 in Form von Kohlenstoffdioxid (CO2) ausgetragen wird. Diese Austragung des Rußes erfolgt solange, wie die zur Oxidation des Rußes notwendigen Bedingungen vorliegen. Dabei ist in Figur 3 die aus dem Partikelfilter 14 oder dem Vier-Wege-Katalysator 22 ausgetragene Partikelmasse Pₚₘ über der Zeit t aufgetragen. Kommt der Verbrennungsmotor 10 zu stehen, so wird keine weitere Frischluft in den Abgaskanal 20 gefördert, sodass die Regeneration des Partikelfilter 14 oder des Vier-Wege-Katalysators 22 zum Stillstand kommt. Somit schützt das vorgeschlagenen Verfahren auch vor einem unkontrollierten Rußabbrand auf dem Partikelfilter 14 oder dem Vier-Wege-Katalysator 22, da der Sauerstoffüberschuss zur Oxidation des Rußes immer nur für einen zeitlich sehr begrenzten Zeitraum von wenigen Sekunden zur Verfügung steht. Wird der Verbrennungsmotor 10 nach dem Stillstand des Verbrennungsmotors 10 erneut gestartet, so kommt es zu einer erneuten Beladung des Partikelfilters 14 oder des Vier-Wege-Katalysator 22 mit Rußpartikeln, wobei der Rußeintrag in den Partikelfilter 14 oder den Vier-Wege-Katalysator 22 durch ein Berechnungsmodell ermittelt wird.

### Bezugszeichenliste

- 10: Verbrennungsmotor
- 12: Abgasanlage
- 14: Partikelfilter
- 16: Drei-Wege-Katalysator
- 18: NOx-Speicherkatalysator
- 20: Abgaskanal
- 22: Vier-Wege-Katalysator
- 24: Steuergerät
- 26: erste Lambdasonde
- 28: zweite Lambdasonde
- 30: dritte Lambdasonde
- 32: Auslass
- 34: Brennraum
- 36: Drosselklappe
- 38: Ansaugkanal
- 40: Start-Stopp-System
- 42: Abgasturbolader
- 44: Turbine
- 46: Verdichter

- n: Drehzahl des Verbrennungsmotors
- n_{A}: Abschaltdrehzahl
- nₗ: gewöhnliche Leerlaufdrehzahl
- Pₚₘ: aus dem Partikelfilter ausgetragene Partikelmasse
- S₁: Schwellenwert
- S_{T}: Schwellentemperatur
- S_{L}: Schwellenwert für die Beladung des Partikelfilters
- T_{EG}: Abgastemperatur
- U/min: Umdrehungen pro Minute
- λ_{E}: Verbrennungsluftverhältnis des Verbrennungsmotors

## Patentansprüche

1. Verfahren zur Abgasnachbehandlung eines Verbrennungsmotors (10), in dessen Abgasanlage (12) ein Partikelfilter (14) oder ein Vier-Wege-Katalysator (22) angeordnet ist, umfassend folgende Schritte:
- Betreiben des Verbrennungsmotors (10) in einem Normalbetrieb mit stöchiometrischem Verbrennungsluftverhältnis, wobei die bei der Verbrennung entstehenden Rußpartikel in der Abgasanlage (12) durch den Partikelfilter (14) oder den Vier-Wege-Katalysator (22) zurückgehalten werden,
- Ermitteln des Partikeleintrags in den Partikelfilter (14) oder den Vier-Wege-Katalysator (22) durch ein Berechnungsmodell,
- Übermitteln eines Abschaltwunsches des Verbrennungsmotor (10) an ein Steuergerät (24) des Verbrennungsmotors (10),
- Abschalten der Kraftstoffeinspritzung in die Brennräume (34) des Verbrennungsmotors (10), wobei die Kraftstoffeinspritzung abgeschaltet wird, wenn die Motordrehzahl (n) des Verbrennungsmotors (10) oberhalb eines Schwellenwertes (S₁) liegt,
- Regeneration des Partikelfilter (14) oder des Vier-Wege-Katalysators (22) durch den beim Auslauf des Verbrennungsmotors (10) nach Abschaltung der Kraftstoffeinspritzung in die Abgasanlage (12) geförderten Restsauerstoffs, wobei
- der Rußaustrag aus dem Partikelfilter (14) oder dem Vier-Wege-Katalysators (22) durch ein Berechnungsmodell ermittelt wird.

2. Verfahren zur Abgasnachbehandlung nach Anspruch 1, **dadurch gekennzeichnet, dass** die Drehzahl (n) des Verbrennungsmotors (10) vor dem Abschalten auf eine Drehzahl (n_{A}) oberhalb des Schwellenwertes (S₁) angehoben wird, wenn sich der Verbrennungsmotor (10) zum Zeitpunkt des Abschaltwunsches im Leerlauf befindet.

3. Verfahren zur Abgasnachbehandlung nach Anspruch 1 oder 2, **dadurch gekennzeichnet, dass** der Schwellenwert (S₁) der Drehzahl (n) oberhalb der gewöhnlichen Leerlaufdrehzahl (nₗ) des Verbrennungsmotors (10) liegt.

4. Verfahren zur Abgasnachbehandlung nach Anspruch 3, **dadurch gekennzeichnet, dass** der Schwellenwert (S₁) im Bereich von 1100 U/min bis 1800 U/min liegt.

5. Verfahren zur Abgasnachbehandlung nach einem der Ansprüche 1 bis 4, **dadurch gekennzeichnet, dass** die Kraftstoffeinspritzung in die Brennräume (34) des Verbrennungsmotors (10) nur dann abgeschaltet wird, wenn die Temperatur (T_{PF}) des Partikelfilters (14) oder des Vier-Wege-Katalysators (22) oder die Abgastemperatur (T_{EG}) oberhalb einer Schwellentemperatur (S_{T}) befindet.

6. Verfahren zur Abgasnachbehandlung nach Anspruch 5, **dadurch gekennzeichnet, dass** die Schwellentemperatur (S_{T}) im Bereich von 550°C bis 700°C liegt.

7. Verfahren zur Abgasnachbehandlung nach einem der Ansprüche 1 bis 6, **dadurch gekennzeichnet, dass** eine Drosselklappe (36) im Ansaugkanal (38) des Verbrennungsmotors (10) bei dem Abschaltewunsch des Verbrennungsmotors (10) vollständig geöffnet wird.

8. Verfahren zur Abgasnachbehandlung nach einem der Ansprüche 1 bis 7, **dadurch gekennzeichnet, dass** das Abschaltsignal des Verbrennungsmotors (10) durch ein Start-Stopp-System (40) des Verbrennungsmotors (10) getriggert wird.

9. Verfahren zur Abgasnachbehandlung nach einem der Ansprüche 1 bis 8, **dadurch gekennzeichnet, dass** das Verfahren gestartet wird, wenn die Beladung des Partikelfilters (14) oder des Vier-Wege-Katalysators (22) oberhalb eines Schwellenwertes (S_{L}) für die Beladung des Partikelfilters (14) oder des Vier-Wege-Katalysators (22) liegt.

10. Verfahren zur Abgasnachbehandlung nach einem der Ansprüche 1 bis 8, **dadurch gekennzeichnet, dass** bei Erkennen eines zeitnahen Abschaltwunsches des Verbrennungsmotors (10) die Abgastemperatur (T_{EG}) angehoben wird.

11. Vorrichtung zur Abgasnachbehandlung eines Verbrennungsmotors (10) mit einer Abgasanlage (12), in der ein Partikelfilter (14) oder ein Vier-Wege-Katalysator (22) angeordnet ist, sowie mit einem Steuergerät (24) mit einem maschinenlesbaren Programmcode, welches bei Ausführung des Programmcodes dazu eingerichtet ist, ein Verfahren nach einem der Ansprüche 1 bis 10 durchzuführen.

12. Vorrichtung zur Abgasnachbehandlung nach Anspruch 11, **dadurch gekennzeichnet, dass** der Partikelfilter (14) oder der Vier-Wege-Katalysator (22) motornah als erste Komponente der Abgasnachbehandlung angeordnet ist.

13. Vorrichtung zur Abgasnachbehandlung nach Anspruch 11 oder 12, **dadurch gekennzeichnet, dass** dem Verbrennungsmotor (10) ein Start-Stopp-System (40) zugeordnet ist.

## Claims

1. Method for the exhaust gas treatment of an internal combustion engine (10), in whose exhaust system (12) is arranged a particle filter (14) or a four-way catalytic converter (22), comprising the following steps:
- operating the internal combustion engine (10) in a normal operation with a stoichiometric combustion-air ratio, wherein the soot particles arising during combustion are retained in the exhaust system (12) by the particle filter (14) or the four-way catalytic converter (22),
- determining the particle input into the particle filter (14) or the four-way catalytic converter (22) by means of a calculation model,
- transmitting a shutdown request of the internal combustion engine (10) to a control unit (24) of said internal combustion engine (10),
- shutting down the fuel injection into the combustion chambers (34) of the internal combustion engine (10), wherein the fuel injection is shut down if the engine speed (n) of the internal combustion engine (10) is above a threshold value (S₁),
- regeneration of the particle filter (14) or of the four-way catalytic converter (22) by means of the residual oxygen delivered into the exhaust system (12) upon the internal combustion engine (10) running down after shutting down the fuel injection, wherein
- the soot discharge from the particle filter (14) or from the four-way catalytic converter (22) is determined by means of a calculation model.

2. Method for exhaust gas treatment according to Claim 1, **characterized in that** the speed (n) of the internal combustion engine (10) is increased to a speed (n_{A}) above the threshold value (Si) before the shutdown if the internal combustion engine (10) is idling at the point in time of the shutdown request.

3. Method for exhaust gas treatment according to Claim 1 or 2, **characterized in that** the threshold value (Si) of the speed (n) is above the typical idling speed (nₗ) of the internal combustion engine (10).

4. Method for exhaust gas treatment according to Claim 3, **characterized in that** the threshold value (Si) is in a range from 1100 rpm to 1800 rpm.

5. Method for exhaust gas treatment according to any one of Claims 1 through 4, **characterized in that** the fuel injection into the combustion chambers (34) of the internal combustion engine (10) is shut down only if the temperature (T_{PF}) of the particle filter (14) or of the four-way catalytic converter (22) or the exhaust-gas temperature (T_{EG}) is above a threshold temperature (ST).

6. Method for exhaust gas treatment according to Claim 5, **characterized in that** the threshold temperature (S_{T}) is in a range from 550 °C to 700 °C.

7. Method for exhaust gas treatment according to any one of Claims 1 through 6, **characterized in that** a throttle valve (36) in the intake channel (38) of the internal combustion engine (10) is opened fully upon the shutdown request of said internal combustion engine (10).

8. Method for exhaust gas treatment according to any one of Claims 1 through 7, **characterized in that** the shutdown signal of the internal combustion engine (10) is triggered by a start-stop system (40) of said internal combustion engine (10).

9. Method for exhaust gas treatment according to any one of Claims 1 through 8, **characterized in that** the method is started if the loading of the particle filter (14) or of the four-way catalytic converter (22) is above a threshold value (S_{L}) for the loading of said particle filter (14) or of said four-way catalytic converter (22).

10. Method for exhaust gas treatment according to any one of Claims 1 through 8, **characterized in that** the exhaust gas temperature (T_{EG}) is raised upon detection of a contemporaneous shutdown request of the internal combustion engine (10).

11. Device for the exhaust gas treatment of an internal combustion engine (10), said device having an exhaust system (12) in which is arranged a particle filter (14) or a four-way catalytic converter (22), and having a control unit (24) having a machine-readable program code, said control unit (24) being configured to carry out a method according to any one of Claims 1 through 10 upon execution of said program code.

12. Device for exhaust gas treatment according to Claim 11, **characterized in that** the particle filter (14) or the four-way catalytic converter (22) is arranged close to the engine as the first component of the exhaust gas treatment system.

13. Device for exhaust gas treatment according to Claim 11 or 12, **characterized in that** a start-stop system (40) is associated with the internal combustion engine (10).

## Revendications

1. Procédé pour le post-traitement de gaz d'échappement d'un moteur à combustion interne (10), dans le système d'échappement (12) duquel est disposé un filtre à particules (14) ou un catalyseur à quatre voies (22), comprenant les étapes suivantes :
- le fonctionnement du moteur à combustion interne (10) dans un mode de fonctionnement normal avec un taux d'air de combustion stœchiométrique, les particules de suie générées durant la combustion étant retenues dans le système d'échappement (12) par le filtre à particules (14) ou par le catalyseur à quatre voies (22),
- la détermination du dépôt de particules dans le filtre à particules (14) ou dans le catalyseur à quatre voies (22) au moyen d'un modèle de calcul,
- la transmission d'un souhait d'arrêt du moteur à combustion interne (10) à un appareil de commande (24) du moteur à combustion interne (10),
- l'arrêt de l'injection de carburant dans les chambres de combustion (34) du moteur à combustion interne (10), l'injection de carburant étant arrêtée lorsque la vitesse de rotation du moteur (n) du moteur à combustion interne (10) est supérieure à une valeur de seuil (S₁),
- la régénération du filtre à particules (14) ou du catalyseur à quatre voies (22) par l'oxygène résiduel introduit dans le système d'échappement (12) lors de la décélération du moteur à combustion interne (10) après l'arrêt de l'injection de carburant,
- l'évacuation des suies du filtre à particules (14) ou du catalyseur à quatre voies (22) étant déterminée au moyen d'un modèle de calcul.

2. Procédé pour le post-traitement de gaz d'échappement selon la revendication 1, **caractérisé en ce que** la vitesse de rotation (n) du moteur à combustion interne (10) avant l'arrêt est élevée à une vitesse de rotation (n_{A}) supérieure à la valeur de seuil (S₁), si le moteur à combustion interne (10) se trouve au ralenti au moment du souhait d'arrêt.

3. Procédé pour le post-traitement de gaz d'échappement selon la revendication 1 ou 2, **caractérisé en ce que** la valeur de seuil (Si) de la vitesse de rotation (n) est supérieure à la vitesse de rotation normale du ralenti (nₗ) du moteur à combustion interne (10).

4. Procédé pour le post-traitement de gaz d'échappement selon la revendication 3, **caractérisé en ce que** la valeur de seuil (Si) est située dans la plage de 1100 tr/min à 1800 tr/min.

5. Procédé pour le post-traitement de gaz d'échappement selon l'une quelconque des revendications 1 à 4, **caractérisé en ce que** l'injection de carburant dans les chambres de combustion (34) du moteur à combustion interne (10) n'est arrêtée que si la température (T_{PF}) du filtre à particules (14) ou du catalyseur à quatre voies (22) ou la température des gaz d'échappement (T_{EG}) est supérieure à une température de seuil (S_{T}).

6. Procédé pour le post-traitement de gaz d'échappement selon la revendication 5, **caractérisé en ce que** la température de seuil (S_{T}) est située dans la plage de 550 °C à 700 °C.

7. Procédé pour le post-traitement de gaz d'échappement selon l'une quelconque des revendications 1 à 6, **caractérisé en ce qu'**un papillon des gaz (36) dans le canal d'aspiration (38) du moteur à combustion interne (10) est ouvert complètement lors du souhait d'arrêt du moteur à combustion interne (10).

8. Procédé pour le post-traitement de gaz d'échappement selon l'une quelconque des revendications 1 à 7, **caractérisé en ce que** le signal d'arrêt du moteur à combustion interne (10) est déclenché par un système marche/arrêt (40) du moteur à combustion interne (10).

9. Procédé pour le post-traitement de gaz d'échappement selon l'une quelconque des revendications 1 à 8, **caractérisé en ce que** le procédé est lancé lorsque la charge du filtre à particules (14) ou du catalyseur à quatre voies (22) est supérieure à une valeur de seuil (S_{L}) pour la charge du filtre à particules (14) ou du catalyseur à quatre voies (22).

10. Procédé pour le post-traitement de gaz d'échappement selon l'une quelconque des revendications 1 à 8, **caractérisé en ce que**, lors de la détection d'un souhait d'arrêt prochain du moteur à combustion interne (10), la température des gaz d'échappement (T_{EG}) est augmentée.

11. Dispositif pour le post-traitement de gaz d'échappement d'un moteur à combustion interne (10) comprenant un système d'échappement (12) dans lequel est disposé un filtre à particules (14) ou un catalyseur à quatre voies (22), ainsi que comprenant un appareil de commande (24) comprenant un code de programme lisible par machine, lequel, lorsque le code de programme est exécuté, est configuré pour exécuter un procédé selon l'une quelconque des revendications 1 à 10.

12. Dispositif pour le post-traitement de gaz d'échappement selon la revendication 11, **caractérisé en ce que** le filtre à particules (14) ou le catalyseur à quatre voies (22) est disposé à proximité du moteur comme premier organe du post-traitement de gaz d'échappement.

13. Dispositif pour le post-traitement de gaz d'échappement selon la revendication 11 ou 12, **caractérisé en ce qu'**un système marche/arrêt (40) est associé au moteur à combustion interne (10).
